Europäisches Patentamt

European Patent Office

Office européen des brevets

(11) Publication number: **0 226 926**
A2

# EUROPEAN PATENT APPLICATION

(21) Application number: 86117043.9

(22) Date of filing: 08.12.86

(51) Int. Cl.⁴: **A 23 K 1/18**
**A 23 K 1/10, A 01 K 97/04**

(30) Priority: 13.12.85 JP 279144/85

(43) Date of publication of application:
01.07.87 Bulletin 87/27

(84) Designated Contracting States:
BE DE FR IT SE

(71) Applicant: THREE BOND CO., LTD.
1456, Hazama-cho
Hachioji-shi Tokyo(JP)

(72) Inventor: Kikuta, Toshitaka
Three Bond Co., Ltd. 1456, Hazama-cho
Hachioji-shi Tokyo(JP)

(72) Inventor: Hayamizu, Kazuo
Three Bond Co., Ltd. 1456, Hazama-cho
Hachioji-shi Tokyo(JP)

(74) Representative: Sajda, Wolf E., Dipl.-Phys. et al,
MEISSNER, BOLTE & PARTNER Widenmayerstrasse 48
Postfach 86 06 24
D-8000 München 86(DE)

(54) Baiting feed for cultivating fish, especially elvers and method for preparing the same.

(57) A baiting feed for cultivating fish, especially elvers which is disclosed herein comprises cattlefish as a predominant component, and krill and proper nutritive and attractive auxiliaries added thereto as minor components. Such a baiting feed is prepared by shredding a frozen cattlefish into a size of 6/100 mm or less, mixing the shredded cattlefish with krill and other components such as nutritive and attractive auxiliaries, and forming the mixture into a paste.

EP 0 226 926 A2

Croydon Printing Company Ltd.

0226926

BAITING FEED FOR CULTIVATING FISH, ESPECIALLY
ELVERS AND METHOD FOR PREPARING THE SAME

## BACKGROUND OF THE INVENTION

### FIELD OF THE INVENTION

The present invention relates to a baiting feed for cultivating fish, especially elvers as a substitute for tubificidae and a method for preparing the same.

### DESCRIPTION OF THE PRIOR ART

As is well known, the cultivation of edible eels starts with the rearing of elvers which are so-called fry young eels, but eels do not have a behavior of initially taking a compound feed. Therefore, it is customary that eels must be forced to develop a habit of taking a feed by some way.

Such a usual way by which eels take the habit of taking a feed is to train eels by providing, as a baiting feed, tubificidae providing a strong taste for elvers and to blend a small amount of a compound feed and gradually increase the amount of such feed while decreasing the amount of the tubificidae as the elvers are being trained.

Nowadays, the technique of artificially baiting feeds for elvers is not yet established and at present we have the situation that the cultivations of eels exclusively employ naturally living tubificidae as baits for eels.

It is to be noted that "tubificidae" designate those which naturally live and grow in brooks in various districts and which are most commonly used as baits for aquarium fish and also as baiting feeds for culture fish.

With tubificidae, however, there are not a few problems.

First, regions where tubificidae live and grow are dirty and for this reason, they carry a variety of germs. Therefore, if such tubificidae are fed to elvers, then they may convey diseases such as Paracolo disease, resulting in a reduced existence rate of elvers.

In addition, because tubificidae are natual products, the output thereof depends upon the weather conditions such as the atmospheric temperature, the amount of rainfall or the like and hence, it is difficult to keep a demand and supply balance. More specifically, the demand for baiting feeds for elvers increases for a period of from November to March, and there is an anxiety about a variation in price and a short supply in this period.

Further, tubificidae are living creatures and hence, it is impossible to preserve them for a longer period. Even for a shorter period, the preservation of them requires the greatest possible care and many labors and further, many losses due to death, escape, etc. during preservation cannot be also ignored.

## SUMMARY OF THE INVENTION

It is therefore an object of the present invention to provide a baiting feed for cultivating fish, especially elvers which exhibits a high taste and a satisfactory baiting rate and has an ability of promoting the growth.

It is another object of the present invention to provide a method for preparing such a baiting feed.

According to the present invention, the above objects are accomplished by providing a baiting feed for cultivating fish, especially elvers which comprises cattlefish as a predominant component, and krill and proper nutritive and attractive auxiliaries added thereto as minor components.

In a second aspect of the present invention, there is provided a method for preparing a baiting feed for elvers, comprising the steps of shredding frozen cattlefish into a size of 6/100 mm or less, mixing the shredded cattlefish with krill and other components such as nutritive and attractive auxiliaries, and forming the mixture into a paste.

One feature of the present invention is in that krill is added to cattlefish. An artificial feed according to the present invention is excellent in taste and attractivity, and with such a feed it is possible to provide an increase in baiting rate and to promote the growth of elvers, leading to an increase in efficiency of eel cultivation.

The preparing method according to the present invention is based on the shredding of a frozen cattlefish for production of a paste feed, and with such a method, it is possible to easily produce an artificial feed, at low cost, which is easy to eat for elvers.

BRIEF DESCRIPTION OF THE DRAWINGS

Fig.1 is a graph illustrating the results of tests for baiting rate; and

Fig.2 is a graph illustrating the results of tests for growing ability.

EXAMPLES

Prior to the description of Examples, it will now be proven that an artificial feed prepared from the addition of a proper attractive auxiliary to cattlefish is excellent in taste and attractivity and presents a high baiting rate.

For the purpose of this proving, previous tests were conducted with formulations as given in Table 1 wherein "parts" represent parts by weight.

Table 1

| Test No. | Cattlefish | Cattlefish oil |
|----------|------------|----------------|
| 1 | 100 parts | 0 part |
| 2 | 100 parts | 1 part |
| 3 (sample II) | 100 parts | 3 parts |
| 4 | 100 parts | 5 parts |

The cattlefish was cut into minced pieces in a meat chopper, and a cattlefish oil was added to the minced pieces to provide paste samples 1 to 4.

These samples and tubificidae (sample I) for comparison were fed, for 7 days on end, to 100 elvers (occuring in Japan ) placed in a 45 cm square basin maintained at a temperature of 28 ± 1°C to determine the baiting rates. The results of this baiting rate are given by %-values in Table 2.

#### Table 2

| Days | Tubificidae (sample I) | 0 part | 1 part | 3 parts (sample II) | 5 parts |
|------|------------------------|--------|--------|---------------------|---------|
| 1 | 60 | 72 | 80 | 92 | 92 |
| 2 | 88 | 84 | 96 | 100 | 100 |
| 3 | 98 | 94 | 100 | 100 | 100 |
| 4 | 100 | 100 | 100 | 100 | 100 |
| 5 | 100 | 100 | 100 | 100 | 100 |
| 6 | 100 | 100 | 100 | 100 | 100 |
| 7 | 100 | 100 | 100 | 100 | 100 |

As can be seen from Table 2, the artificial feeds comprising the cattlefish as a predominant component itself have some taste and attractivity and exhibit a baiting rate of 72% in a day even without the addition of cattlefish as an attractive auxiliary.

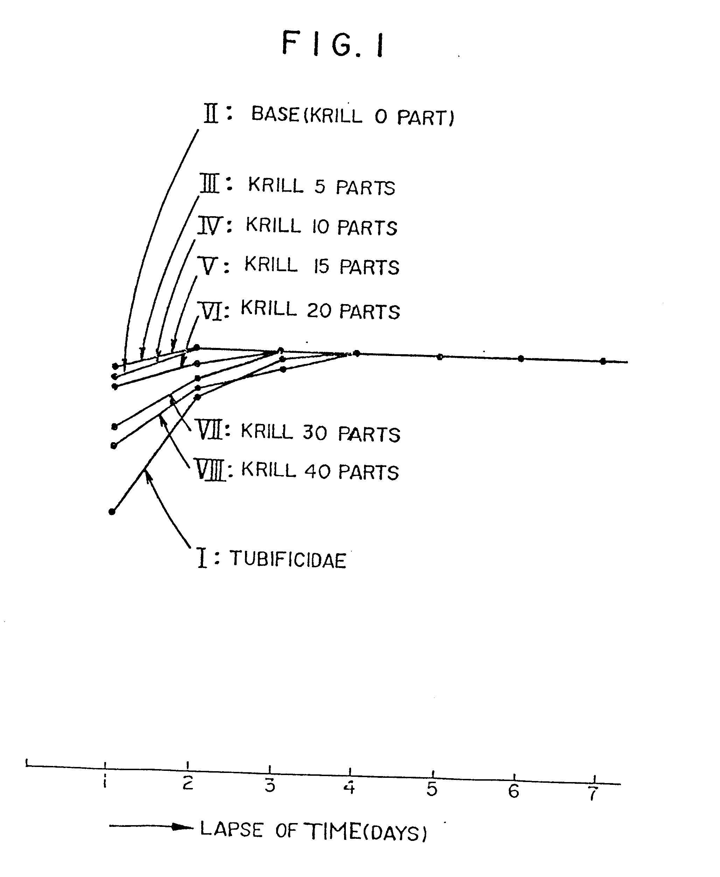

The addition of cattlefish oil causes an increase in baiting rate. The cattlefish oil is utilized to form the feed into a paste, and the addition thereof in three times amount is suitable, because the addition in five times amount has caused an elution to pollute water. The cattlefish oil contains Betain and it is believed that such Betain fulfils an attractive effect. Therefore, when any other component, such as a short-necked clam, containing Betain is incorporated, the amount of such component added should be moderated. The results of tests for the sample I of tubificidae and the sample II containing 3 parts of cattlefish oil added are illustrated in Fig.1.

It has been proved from the foregoing that the sample consisting of cattlefish, or of cattlefish and cattlefish oil added thereto is excellent in taste and attractivity and exhibits a high baiting rate, and itself serves alone as an artificial feed for elvers. It should be noted that such artificial feed would not positivily promote the growth of elvers.

Example 1

Example 1 illustrates an artificial feed prepared from the addition of krill to the above-described sample II. In this example, one embodiment of a preparing method is also described.

First, the formulations were made as given in Table 3.

Table 3

| Sample No. | Cattlefish (part) | Cattlefish oil (part) | Krill (part) |
|------------|-------------------|------------------------|--------------|
| II         | 100               | 3                      | 0            |
| III        | 100               | 3                      | 5            |
| IV         | 100               | 3                      | 10           |
| V          | 100               | 3                      | 15           |
| VI         | 100               | 3                      | 20           |
| VII        | 100               | 3                      | 30           |
| VIII       | 100               | 3                      | 40           |

Use was made of the product obtained from the removal of the skin and the internal organ from the cattlefish, followed by freezing.

Then, the frozen cattlefish or product was pulverized in a meat chopper and then shredded into a sized of 0.03 to 0,06 mm in a mill called a mass collider. Krill pieces shredded into a size of 0,03 to 0,06 mm were added to the resulting product and they were mixed in a mixer such as a silent cutter while adding a cattlefish oil, thus providing paste samples II to VIII. The reason why the frozen cattle fish was used is that a feed is obtained free of a 0.06 mm or less long fiber in view of the size in mouth of an elver, i.e., that the frozen cattlefish is easy to pulverize and at this time, a long fiber is easy to cut.

In addition, if the frozen cattlefish is used, it is possible to prevent various germs or bacteria from propagating in the cattlefish or other incorporated components due to the raising of temperature with the generation of heat during pulverization and mixing.

The samples II to VIII provided in the above manner were fed, for 7 days on end, to 100 elvers (occuring in Japan ) placed within a 45 cm square basin maintained at $28 \pm 1^{\circ}$C to determine the baiting rate. The results are given by % value in Table 4. (See Table 2 as with the results for the sample II)

Table 4

| | Sample No. | | | | | |
| --- | --- | --- | --- | --- | --- | --- |
| | III | IV | V | VI | VII | VIII |
| Days | 5 parts | 10 parts | 15 parts | 20 parts | 30 parts | 40 parts |
| 1 | 94 | 92 | 94 | 90 | 80 | 76 |
| 2 | 100 | 100 | 100 | 96 | 92 | 90 |
| 3 | 100 | 100 | 100 | 100 | 100 | 96 |
| 4 | 100 | 100 | 100 | 100 | 100 | 100 |
| 5 | 100 | 100 | 100 | 100 | 100 | 100 |
| 6 | 100 | 100 | 100 | 100 | 100 | 100 |
| 7 | 100 | 100 | 100 | 100 | 100 | 100 |

These results are illustrated in Fig.1.

As given in Table 4 and shown in Fig.1, the addition of krill in a small amount causes the taste to be increased and the baiting rate to be enhanced. However, with the krill incorporated in an amount of 20 parts or more, the increase in taste is lower, and the amount exceeding 40 parts results in a taste inferior to that for tubificidae. In addition, the samples containing krill added in an amount of 30 parts or more are poor in adhering property, and the addition of krill in an amount exceeding 40 parts is apt to bring about the pollution of water.

It can be seen from the above results that the amount of krill added in a range of 0 to 40 parts can be used and an amount of 20 parts or less is preferred.

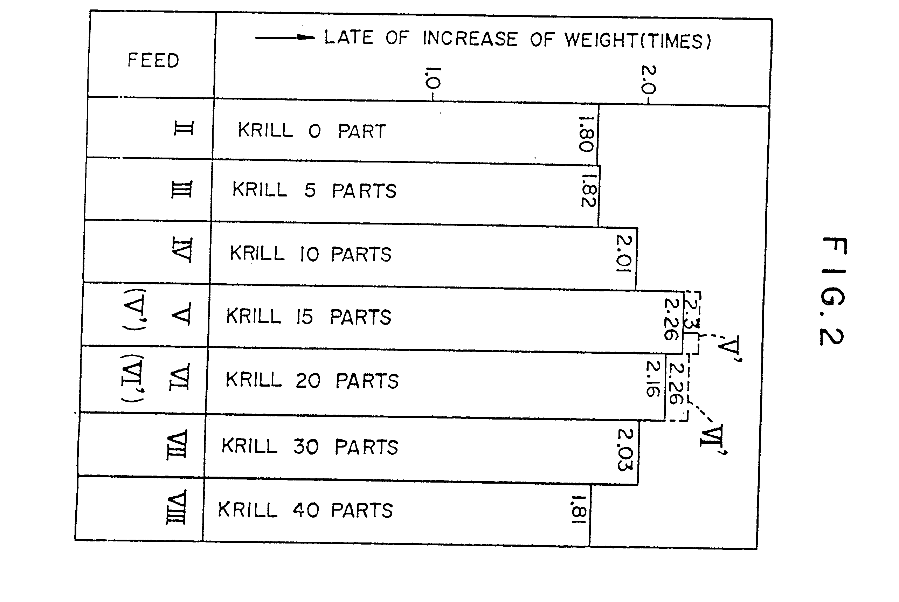

Then, the tests of the above samples II to VIII were conducted for the growing ability. The results are given in Table 5 and illustrated in Fig.2.

The test results represent the variations in weight (magnification) after the lapse of 10 days from the feeding of these samples to elvers occuring in Japan.

### Table 5

| Sample No. | II | III | IV | V | VI | VII | VIII |
|---|---|---|---|---|---|---|---|
| Mag.* | 1,80 | 1,82 | 2,01 | 2,25 | 2,16 | 2,03 | 1,81 |

\* - Magnification

It will be understood from the results given in Table 5 and shown in Fig.2 that the elvers have eaten the feeds containing the krills added and have grown larger. In other words, the elvers were trained to bait, while being grown larger.

This is guessed as being due to that the krill helps the digestion to promote the growth of the elvers because it has a self-digesting enzyme.

The more preferred amount of krill added is of 10 to 30 parts from the viewpoint of growing ability and is of 5 to 15 parts from the viewpoint of adhering property and eventually, 10 to 15 parts are most preferred.

In this way, if krill is added to cattlefish, there is provided an artificial feed which is not only excellent in taste and attractivity and exhibits a high baiting rate, but also provides a growing ability for elvers.

Example 2

Example 2 illustrates a feed prepared from the addition of krill to cattlefish, followed by the further addition of yolk as a nutritive auxiliary thereto.

As in Example 1, the most preferred amount of krill added is of 15 to 20 parts. Therefore, in this example, formulations as given in Table 6 were made on the basis of these samples.

Table 6

| Basic composition | (V) Ca. 100 parts + Ca. oil 3 parts + Krill 10 parts | (VI) Ca. 100 parts + Ca. oil 3 parts + Krill 15 parts |
|---|---|---|
| Addition of yolk (part) | 0 | 0 |
| | (V') 5 | (VI') 5 |
| | 10 | 10 |

Ca. = Cattlefish

The yolk is the yellow of a hen's egg. The results for the growing ability (variation in weight) are given in Table 7. The values of variation in weight are represented by magnifications.

Table 7 (Variation in weight)

| Basic composition | | (V) Ca. 100 parts + Krill 10 parts | (VI) Ca. 100 parts + krill 10 parts |
|---|---|---|---|
| Addition of yolk (parts) | 0 | 2,25 | 2,16 |
| | 5 | (V') 2,31 | (VI') 2,26 |
| | 10 | 2,21 | 2,12 |

The results for the samples (V') and (VI') are indicated by a broken line in Fig.2.

As apparent from Table 7, the variation in weight is considerable with the sample containing the yolk added in an mount of 5 parts. Another tests showed that the most preferred amount of yolk added is of 3 to 8 parts.

It should be noted that the yolk is not limited to the yellow of a hen's egg and any yolk may be used if being of a poultry. In this way, the addition of yolk enables the growth of elvers to be promoted, but it should be understood that other components may be added to the yolk alone or in combination, such as casein, defatted dry milk powder, fish eggs, animal's liver, short necked clam or the like.

Even a baiting feed for elvers as described in Example 2 can be prepared by a method similar to that in Example 1.

More specifically, a paste feed can be prepared by pulverizing frozen cattlefish in a meat chopper and then mashing the pulverized material into 0,03 to 0,06 mm in a mass collider, while mashing krill into 0,03 to 0,06 mm in a mass collider, then adding yolk to both the resulting materials, and throwing these mixtures into a silent cutter together with   cattlefish oil.

The resultant feed is colored into a light yellow due to the yolk used.  The colored feed is convenient in that the elvers taking the feed can be viewed  Alternatively, a coloring agent may be also added in order to further deeply color the feed.

Example 3

Example 3 illustrates another embodiment of a preparing method for a feed resulting from the further freeze drying of a product formed into a paste as described in the previous Example 1.

As in Example 1,   cattlefish was shredded and mixed with other components, thus forming a feed product into a paste.  The paste feed is difficult to preserve intact for long period because it is corruptible.

Accordingly, in this example, the paste-formed feed was subjected to a freeze dryer where it was dried and solidified.  Thereafter, the resulting solid material was pulverized into 100 meshes, and a suitable adhering agent was added thereto.  After stirring and mixing, the mixture was placed into a vessel or sack of a selected volume and then properly vacuum packed to provide for marketing.  The adhering agents which can be used include food additives such as guar gum, $\alpha$- starch, wheat gluten, casein, corn starch, gelatin, sodium alginate, and/or sodium polyacrylate.

The freeze drier used was a freeze drying device commercially available from Toyo Giken, K.K.  This device is of a type in which a paste feed of a uniform thickness is placed onto a tray-like vessel which is then subjected to a vacuum drying at a temperature of $-30^\circ$C to $+20^\circ$C for about 7 hours and to a further vacuum drying at a temperature of $+20^\circ$C to $30^\circ$C. The use of this device enables a plate-shaped solid feed to be provided.

For a pulverizer, any type may be utilized and hence, the description thereof is omitted herein.

The reason why an adhering agent was added to the pulverized dry feed is that because the adhering property is reduced due to the freeze drying, this is compensated for, so that the paste feed produced by the post addition of water to the finished powdery product, followed by the forming into a paste has a moderate adhering property.

The vessel or sack-packed feed provided for marketing is of such a nature capable of being formed into a paste by the addition of water in an amount of 2 to 3 times by weight and can be preserved for a long period (more than several years).

Claims

1. A baiting feed for cultivating fish, especially elvers comprising cattlefish as a predominant component, and krill and proper nutritive and attractive auxiliaries added thereto as minor components.

2. The baiting feed according to claim 1, characterized in that the nutritive auxiliary includes yolk.

3. The baiting feed according to claim 1 or 2, characterized in that the attractive auxiliary includes Betain and/or cattlefish oil.

4. The baiting feed according to any of claims 1 to 3, characterized in that the cattlefish and the krill have a size of 0,06 mm or less, preferably 0,03 to 0,06 mm.

5. The baiting feed according to any of claims 1 to 4, characterized in that the amount of krill is 10 to 30 parts by weight, preferably 10 to 15 parts by weight.

6. The baiting feed according to any of claims 1 to 5, characterized in that the amount of yolk is 3 to 8 parts by weight.

7. The baiting feed according to any of claims 1 to 6, characterized in that the amount of cattlefish oil is about 3 parts by weight.

8. A method for preparing a baiting feed for cultivating fish, especially elvers, comprising the steps of shredding frozen cattlefish into a size of 6/100 mm or less, mixing the shredded cattlefish with krill and other components such as nutritive and attractive auxiliaries, and forming the mixture into a paste.

9. The method for preparing a baiting feed according to claim 8, further including subsequently feeze drying the product formed into a paste.

10. The method according to claim 9, characterized in that the resulting solid product is pulverized and a suitable adhering agent , for example guar gum, $\alpha$-starch, wheat gluten, casein, corn starch, gelatin, sodium alginate, and/or sodium polyacrylate is added thereto.

# F I G. 1

II : BASE(KRILL 0 PART)

III : KRILL 5 PARTS

IV : KRILL 10 PARTS

V : KRILL 15 PARTS

VI : KRILL 20 PARTS

VII : KRILL 30 PARTS

VIII : KRILL 40 PARTS

I : TUBIFICIDAE

LAPSE OF TIME(DAYS)

# FIG.2

| FEED | LATE OF INCREASE OF WEIGHT (TIMES) |
|---|---|
| II | KRILL 0 PART — 1.80 |
| III | KRILL 5 PARTS — 1.82 |
| IV | KRILL 10 PARTS — 2.01 |
| V (V') | KRILL 15 PARTS — 2.26 (V' 2.3) |
| VI (VI') | KRILL 20 PARTS — 2.16 (VI' 2.26) |
| VII | KRILL 30 PARTS — 2.03 |
| VIII | KRILL 40 PARTS — 1.81 |